# EUROPEAN PATENT APPLICATION

(11) **EP 2 653 051 A1**
(43) Date of publication of application: **23.10.2013**
(21) Application number: 13003613.0
(22) Date of filing: 05.09.2011
(51) Int. Cl.: A44C 17/02, B65D 73/02, B44C 1/18

(54) **Carrier tape accommodating decorative rigid bodies and use thereof**

(30) Priority: 03.09.2010 CH 14272010
(62) Divisional of application: 11752492.6
(71) Applicant: GRATZER! Technologies GmbH & Co. KG, 1130 Wien (AT)
(72) Inventor: Gratzer, Roland F., 1130 Wien (AT)
(74) Representative: Diehl & Partner GbR

(57) **Abstract**

A carrier tape (19) has a plurality of arrayed pouches (24b) accommodating decorative rigid bodies (21) therein, wherein a succession of through-recesses (22) is formed in one of its side rims (20), and further comprises an adhesive tape (23) to which the decorative rigid bodies are adhered. The carrier tape is useable for applying the decorative rigid bodies accommodated therein individually to a substrate (33), by means of an actuator (29) pressing on the decorative rigid bodies one by one.

## Description

The invention relates to a transfer strip (or carrier tape) accommodating elements such as decorative rigid bodies until transfer of same onto a substrate takes place.

As of recently, glass crystals are not only used for making pieces of jewellery, but increasingly also for decorative purposes such as on various substrates. E.g., glass crystals are nowadays found on clothing, glass bottles or electronic equipment for individualising these articles. To date, there has not been a satisfactory way of positioning such elements, as in particular glass crystals, in the form of two-dimensional patterns on paper, cardboard or other flat articles, in particular printable articles.

It is therefore one object of the invention to enable a user to arrange and fix elements such as glass crystals in two-dimensional patterns on paper or other flat, printable substrates.

The object is solved, according to a first aspect, by a transfer strip employed for providing the decorative rigid bodies having a plurality of arrayed pouches for accommodating the elements, and a succession of through-recesses is formed in one of its side rims for transport within a cartridge.

According to a second aspect, the cartridge has parallel and non-coplanar uptake and supply reels. The cartridge further comprises at least one guide reel. The transfer strip providing the decorative rigid bodies is carried by the supply and uptake reels and is guided by the guide reel.

According to a third aspect, an apparatus comprising a casing accommodating the uptake reel, supply reel, guide reel and transfer strip further includes a plunger arranged for exerting a force on each one of the decorative bodies individually so as to protrude the respective decorative body from the casing, where it may come into contact with the surface of the substrate.

According to a fourth aspect, a method for fixing decorative rigid bodies onto a surface of a flat substrate comprises positioning one of the decorative rigid bodies relative to the surface at a distance from the surface, and exerting a force on the decorative body so positioned individually so as to bring the respective decorative body into contact with the surface of the substrate so as to adhere it thereon.

Further aspects and embodiments are set out in the dependent claims.

According to an embodiment, a first and a second reel and a transfer strip (or carrier tape) are housed in a casing, the transfer strip supporting the decorative rigid bodies (or elements). Furthermore, the casing accommodates a plunger which has access to the side of the transfer strip facing away from the elements. Activating the plunger will transfer one element from the transfer strip onto a (sufficiently nearby) surface of an article. This assembly is particularly compact and allows positioning the entire casing accurately in a desired position vis-à-vis a surface of a substrate, before transferring the decorative element exactly in the desired position in the surface.

In a preferred embodiment, the plunger comprises at least one piston spaced a short distance from the transfers trip, and reciprocatingly movable in a direction substantially orthogonal to the transfer strip. The plunger serves to apply a decorative element accurately on the underlying surface. It is also envisaged to apply plural elements simultaneously, using a plunger with accordingly larger dimensions. In another embodiment, the transfer strip may have two or more rows of elements, and there is one piston for each row.

The piston suitably is activated by a drive such as an electric positioning motor displacing the respective element by a predefined amount: In a first, initial position, the piston does not quite contact the element of the transfer strip. In a second, final position, the piston moves the element onto the surface of the substrate and applies a force onto it such that the element is pressed onto the surface with sufficient pressure to adhere it. The positioning motor serves to achieve these goals. Other drives such as by means of a solenoid coil up to a predefined stop, are also envisaged.

According to a preferred embodiment, the end of the piston facing towards the transfer strip, is rounded. When the piston is in the second position, the transfer strip follows the rounding and is thereby released from the transferred element in a successive manner, thus more easily.

According to another embodiment, the transfer strip is moved to a position in which an element (usually the last one in a row) is positioned under the piston (i.e., between the piston and the surface of the substrate) by a drive such as a step motor, before transferring the element.

According to an embodiment, the transfer strip has, along its entire length, a plurality of through-recesses or through-holes engaging with a toothed gear driven by the step motor. This avoids slip in the drive and helps accurately forwarding the transfer strip. The through-holes may be provided on both sides of the strip.

In another embodiment, the first and/or second reel are biased so that the transfer strip is tightened between them. This helps in releasing elements reliably from the transfers trip, in the desired position.

In another embodiment, the casing has a first casing part and a second casing part. The first and second reel and the transfer strip are accommodated in the first casing part, and the drive units and the plunger are accommodated in the second casing part. In this assembly, after all the decorative elements have been applied, the first casing part is replaceable by a fully loaded new first casing part.

Suitably, the driving units are powered by an integrated voltage source such as a battery. In this embodiment, the device does not require an external voltage supply and is thereby made portable and stand-alone.

In an embodiment, the elements (or rigid decorative bodies) are mounted on the transfer strip by an adhesive so as to reliably fix them in the transfer strip until application. The adhesive may be an adhesive tape. The adhesive may be provided on the face of the transfer strip facing away from the elements, and holes are formed in the transfer strip so as to provide a contact between the adhesive and the elements.

In another embodiment, an adhesive such as a pressure sensitive adhesive is applied to the faces of the elements facing away from the transfer strip. The pressure sensitive adhesive develops its adhesive force only upon exertion of a certain pressure such as that provided by the piston, but not when there is only slight contact such as when coiled on the supply reel. In order to avoid premature adhering of elements to other parts of the transfer strip, the pouches in the transfer strip may be dimensioned so as to space apart the elements from the adjacent turn of the coiled transfer strip.

Suitably, a plurality of electrical contacts are provided at a surface of the casing via which the drive units are in electrical contact to control circuitry accommodated in the casing. Thereby, the device is readily controllable by external electrical input commands.

According to another embodiment, the device has essentially the outer dimensions of a common printer cartridge and is adapted for being mounted in a cartridge mount of an ink-jet printer. The elements may then be brought into the desired position on a sheet of paper positioned in the ink-jet printer, in that a first direction is defined by the forwarding direction of the sheet of paper, and a second direction is defined by the transverse motion of the cartridge mount.

According to an embodiment, the elements have bodily (three-dimensional) shape and are in particular glass crystals. Accordingly, the surface of an article such as a sheet of paper may be decorated with glass crystals. In an embodiment, the glass crystals have a base in the range of 1.5 to 3 mm in (largest) diameter and a height of about 0.5 to 2 mm. The shapes in which the glass crystals are arranged may be one of ornaments, schematic patterns, characters and numbers.

According to an embodiment, a cartridge for accommodating a transfer strip carrying an array of decorative bodies each having at least one flat surface comprises an uptake reel carrying a first portion of the transfer strip without decorative bodies; a supply reel carrying a second portion of the transfer strip with the array of decorative bodies; and at least one guide reel for guiding the transfer strip from the supply reel to the uptake reel along a strip pathway, wherein the guide reel is positioned between the uptake reel and the supply reel along the strip pathway, wherein the uptake reel and the supply reel are parallel and non-coplanar.

According to an embodiment, a transfer strip including an array of decorative bodies each having an outer face comprises a receiving layer having an array of pouches, each pouch surrounding at least one of the arrayed decorative bodies, wherein the receiving layer has holes sized and positioned to allow each one of the decorative bodies to pass through one of the holes when transferred from the respective pouch onto a substrate, wherein the decorative bodies have an adhesive applied on at least one of their faces oriented essentially parallel to the plane of the strip, and wherein the transfer strip has a plurality of through-recesses formed in a longitudinal side rim.

According to an embodiment a transfer strip including an array of decorative bodies each having an outer face comprises a tacky layer adhering to each of the arrayed decorative bodies on sides of the decorative rigid bodies opposite to their outer faces, the array extending in a longitudinal direction of the strip; and a stabilizing layer affixed to the tacky layer, and having an array of pouches, each pouch surrounding at least one of the decorative bodies, wherein the stabilizing layer has holes sized and positioned so that each of the decorative bodies is registered with one of the holes, wherein the decorative bodies have a pressure sensitive adhesive applied on their outer faces, and wherein the transfer strip has a plurality of through-recesses formed in a longitudinal side rim. The cartridge may accommodate the transfer strip as described above.

According to an embodiment, a device for transferring decorative bodies onto a substrate from a transfer strip carrying an array of such decorative bodies each having a flat surface comprises an uptake reel carrying a first portion of the transfer strip without decorative bodies; a supply reel carrying a second portion of the transfer strip with the array of decorative bodies; at least one guide reel for guiding the transfer strip from the supply reel to the uptake reel along a strip pathway, wherein the guide reel is positioned between the uptake reel and the supply reel along the strip pathway; and a casing accommodating the uptake, supply and guide reels, wherein the casing further accommodates a piston arranged for exerting a force on each one of the decorative bodies individually so as to protrude at least the flat surface of the respective decorative body from the cartridge. In the device, the transfer strip may be the one described above, or the casing includes the cartridge as described above. The device may further comprise an actuator for moving the piston. The device may further comprise a tractor mechanism for moving forward the transfer strip by a predefined distance after an individual decorative body has been released from the transfer strip. The tractor mechanism may comprise a biasing spring adapted to exert a pulling force on the transfer strip; and a lever arranged to alternately block the motion of the transfer strip and the motion of the piston.

According to an embodiment, a system comprises the transfer strip as described above, the device as described above, and a displacement apparatus such as a printer, e.g. an ink-jet printer, adapted to move a flat substrate such as a sheet of paper in a first direction and to move the cartridge in a second direction parallel to the plane of the substrate and non-parallel, in particular orthogonal to the first direction, the system holding the cartridge such that the direction of protrusion is non-parallel to the plane of the substrate, whereby the protruded decorative bodies come into contact with selectable positions on the substrate.

According to an embodiment, an apparatus for transferring decorative rigid bodies each having at least one flat side from a transfer strip carrying the decorative rigid bodies onto a substrate comprises a first reel for carrying the transfer strip with the decorative rigid bodies; a second reel for receiving the transfer strip after the decorative rigid bodies have been transferred to the substrate; and a piston, located at a position between the first reel and the second reel as measured along the transfer strip, and adapted for individually bringing the decorative rigid bodies into contact with the substrate.

Further advantages and features are apparent from the detailed description below in relation to exemplary embodiments and the appended drawings. These show:
- Figure 1: a cross section of a cartridge;
- Figure 2a: a close-up side view of a transfer strip accommodated in the cartridge of Fig. 1;
- Figure 2b: a top view of a transfer strip according to an embodiment;
- Figure 3: a first step of the application process;
- Figure 4: a second step of the application process;
- Figure 5: a third step of the application step;
- Figure 6: a perspective front view of another example;
- Figure 7: a perspective bottom view of the device shown in Fig. 6;
- Figure 8: a back view of the device shown in Fig. 6;
- Figure 9: a side view of a second casing part;
- Figure 10: a perspective view of the device shown in Fig. 6, where the first and second casing parts have been separated;
- Figure 11: another example of an apparatus for transferring elements onto a substrate; and
- Figure 12: a sketch drawing of a printing system employing the apparatus of Figure 11.

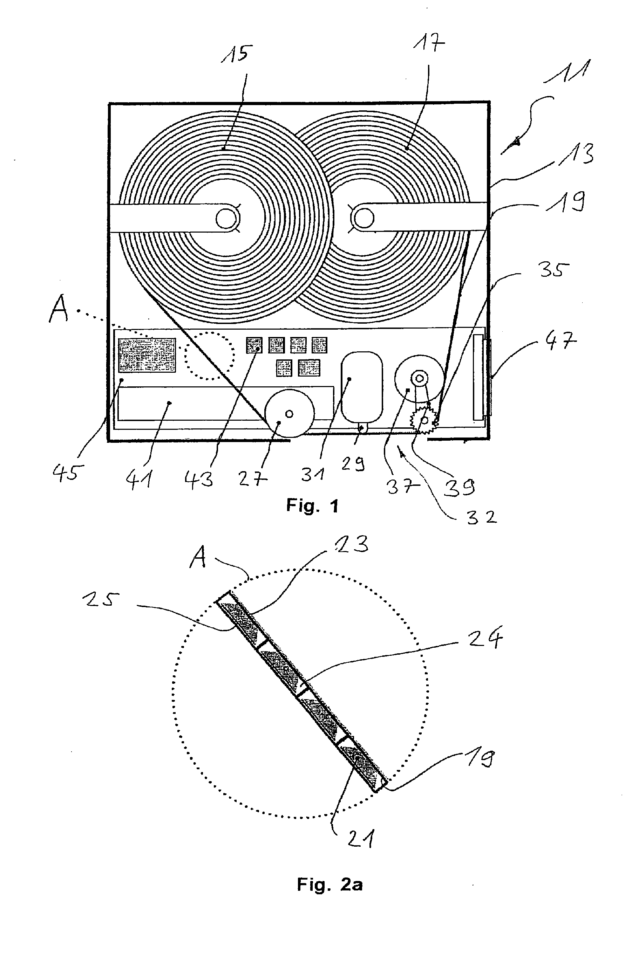

Figure 1 shows a device for transferring elements onto a surface of an article, the device generally indicated by the reference character 11. First and second reels 15, 17 are arranged in a casing 13. On the first reel 15 a transfer tape (or strip) 19 is wound, which is windable onto the second reel 17. The first and second reel 15, 17 are biased against each other, so that the transfer strip 19 between them is also always tightened.

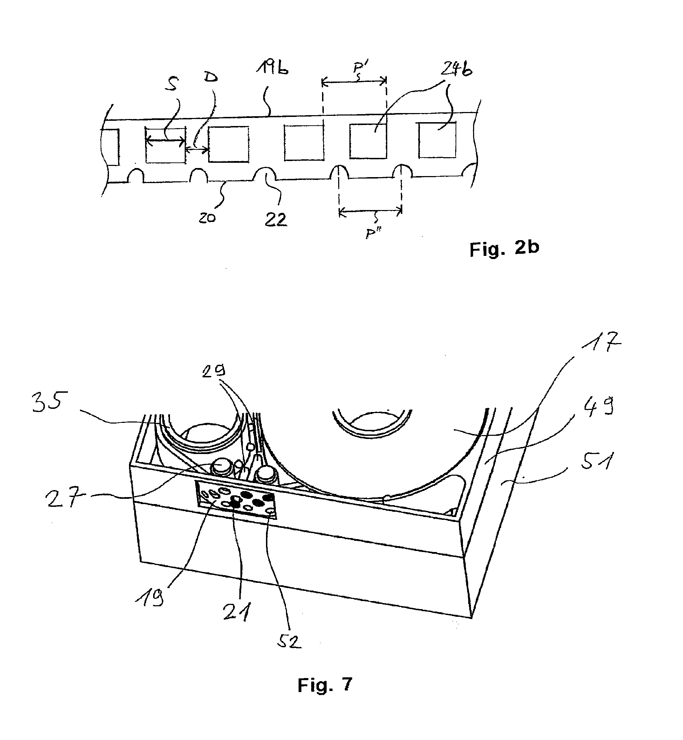

Turning to Figure 2a, this shows the transfer strip 19 enlarged (section A in the dotted circle). At its outer face (as seen from the device), the transfer strip 19 carries elements or rigid decorative bodies such as glass crystals 21, mounted in succession in one or several adjacent rows in an arrayed fashion (such as with constant pitch). As an alternative to glass crystals, other decorative or functional bodies are likewise envisaged, for certain applications depending in part on the substrate or its surface. The glass crystals may have a base diameter ranging from 2.5 mm to 3 mm, and a height from 1 mm to 1.5 mm. The glass crystals (or other elements) 21 are held to the transfer strip 19 by an adhesive such as an adhesive tape 23. As shown in Figure 2, the glass crystals are accommodated in pouches (or pockets, or chambers) 24, which may be formed in succession on the transfer strip. In the coiled-up state (on the first, or supply reel 15), the pouches are dimensioned so that overlying glass crystals 21 are mutually spaced apart. The transfer strip 19 has through holes (shown in Figure 7 described below) in which the glass crystals are accommodated. The glass crystals 21 are flush with the surface of the transfer strip 19 facing away from them, and are held to the transfer strip by the adhesive tape 23. At their surfaces facing away from the transfer strip 19, the glass crystals 21 are provided with a pressure sensitive transfer adhesive 25. A transfer adhesive, in this context, is understood to be an adhesive film devoid of a support matrix, as opposed to an adhesive tape. As shown in Figure 2a, the glass crystals may have frusto-pyramidal or frusto-conical shape. This shape makes application easier, as the area to which the transfer adhesive is applied, is larger than the area which adheres to the adhesive tape. In the variant of Figure 2b, the pouches 24b (crystals not shown) are spaced apart from one another, and generally U-shaped notches 22 extending through the thickness of the transfer strip 19b are formed in one of the side rims 20, to engage with a toothed gear for transport. In other embodiments, the spacing apart of the subsequent pouches is independent from the side rim notches. The spacing amount D of the pouches plus their size S adds to give the pitch P' of the pouches, which may equal that of the notches P". The notches may thereby be staggered with respect to the pouches.

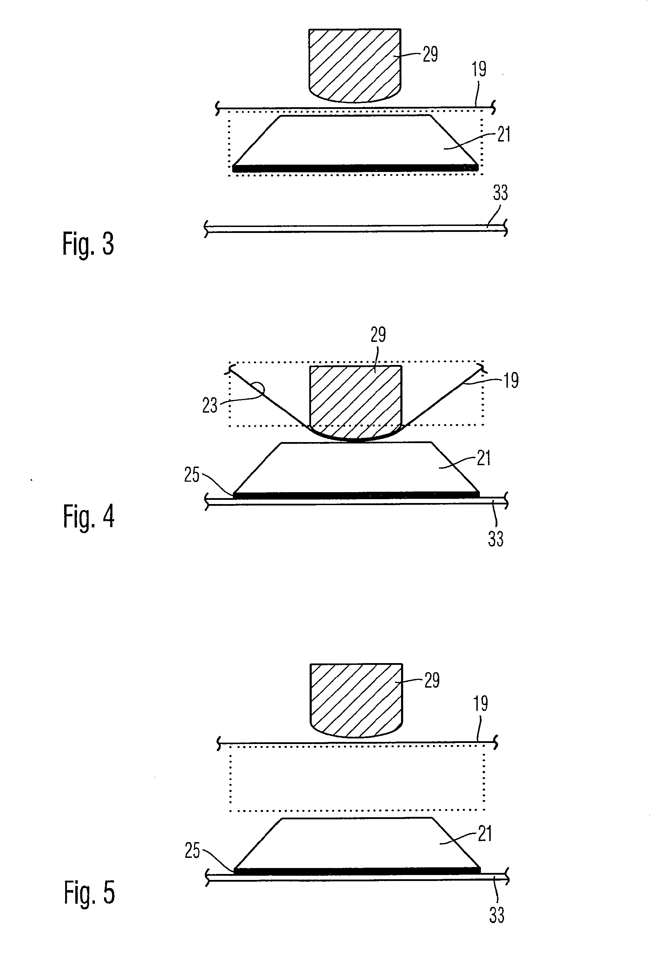

Returning to Figure 1, the transfer strip 19 is guided first around guide reel 27 approximately parallel to the bottom face of the casing 13. The guide reel 27 has a lateral guide for keeping the transfer strip 19 in track when spooling it from the first reel 15 to the second reel 17. Next to the guide reel 27, a plunger in the shape of a piston 29 is mounted a short distance above (inwards) the transfer strip. The piston is driven by a positioning motor 31 shown schematically in Figure 1. The positioning motor 31 in use advances the piston 29 from a first, retracted position to a second, advanced position. Thereby, the glass crystal 21 to be applied protrudes from the casing 13 through the opening 32. This process is shown in more detail in relation to Figures 3 to 5: The transfer strip 19 is moved until a glass crystal 21 is substantially exactly underneath the piston 29. As shown in Figure 4, the piston is moved from its first position to its second position. In so moving, it presses the transfer strip 19 underneath along with the glass crystal 21 onto the surface of an article such as a sheet of paper 33. The end of the piston 29 contacting the transfer strip 19 is formed with a rounded shape. This leads to the transfer strip 19 being bent more at the protruded piston 29 than if the piston had a flat end. As a result, the adhering area between the transfer strip and the glass crystal 21 is reduced during application of the glass crystal, leading to reliable releasing of the glass crystal 21 from the transfer strip 19. The glass crystal 21 is pressed onto the sheet of paper 33 by the piston 29. In this position, the transfer adhesive 25 exhibits a far higher adhesive force than the adhesive tape 23. As shown in Figure 5, the transfer strip 19 therefore readily releases from the glass crystal 21 when the piston 29 is retracted into the first position.

Along its entire length, the transfer strip 19 has on one of its side rims a plurality of successively arranged through-recesses. These through-recesses engage with a toothed gear 35 which in turn is driven by a step motor 37. The connection between the toothed gear 35 and the step motor 37 may e.g. be accomplished by a toothed belt 39. The step motor 37 positions crystals 21 exactly underneath the piston 29 until the transfer strip 19 is completely spooled from the first reel 15 onto the second reel 17. It is envisaged that after all the crystals have been used up, a fresh set of reels including a fully loaded transfer strip 19 may be inserted in the casing 13.

In the embodiment shown in Figure 1, a stand-alone power supply such as a battery 41 is provided in the casing 13. The battery 41 supplies the positioning motor 31, the step motor 37 and control circuitry 43 with electric power. The electric or electronic components, respectively, are advantageously mounted on a printed circuit board 45. Via electrical terminals 47, the device 11 is enabled to receive external control signals which can be forwarded by the control circuitry 43 to the positioning motor 31 or the step motor 37, as the case may be (usually alternatingly).

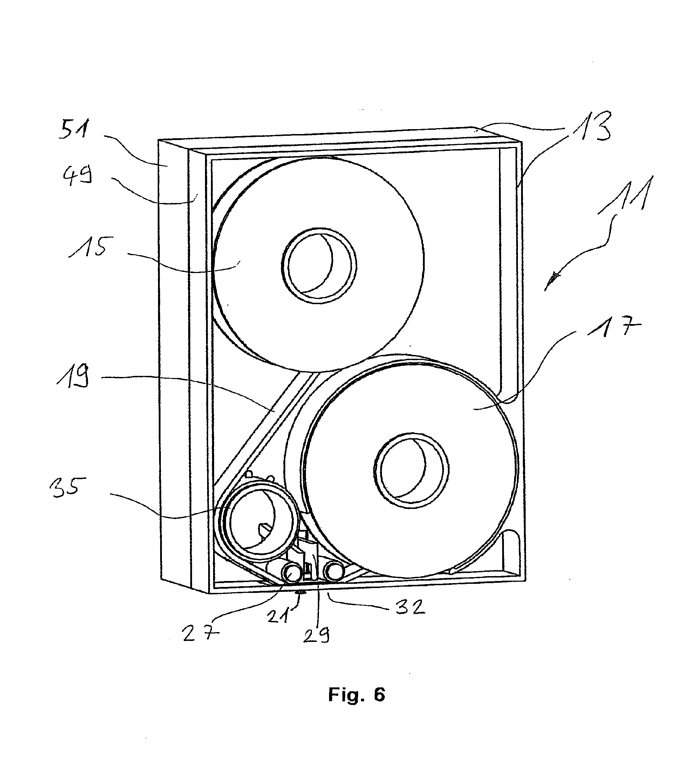

Figure 6 to 10 show another embodiment of the device in which the casing 13 has a first casing part 49 and a second casing part 51. The drive units are accommodated in the second casing part 51 and the reels 15, 17 and the transfers trip 19 are accommodated in the first casing part 49. This two-part assembly enables separating the first casing part 49 from the second casing part 51 after all the crystals 21 have been applied. A new first casing part 49 housing a transfer strip 19 fully loaded with glass crystals 21 may then be mounted on the second casing part 51.

In Figure 7, it can be seen that in this embodiment the glass crystals 21 are arranged in twp adjacent rows in the transfers trip 19. Through-recesses (in this example, through holes 52) engaging with the toothed gear 35 are also discernible. In a variant, U-shaped notches are instead formed in the side rim, rather than circular through holes some distance away from the rim. Each row has its own piston 29 which urges the individual glass crystals out of their support. This means that in this embodiment, when applying a glass crystal 21, the transfer strip 19 is transsected by the respective piston 29.

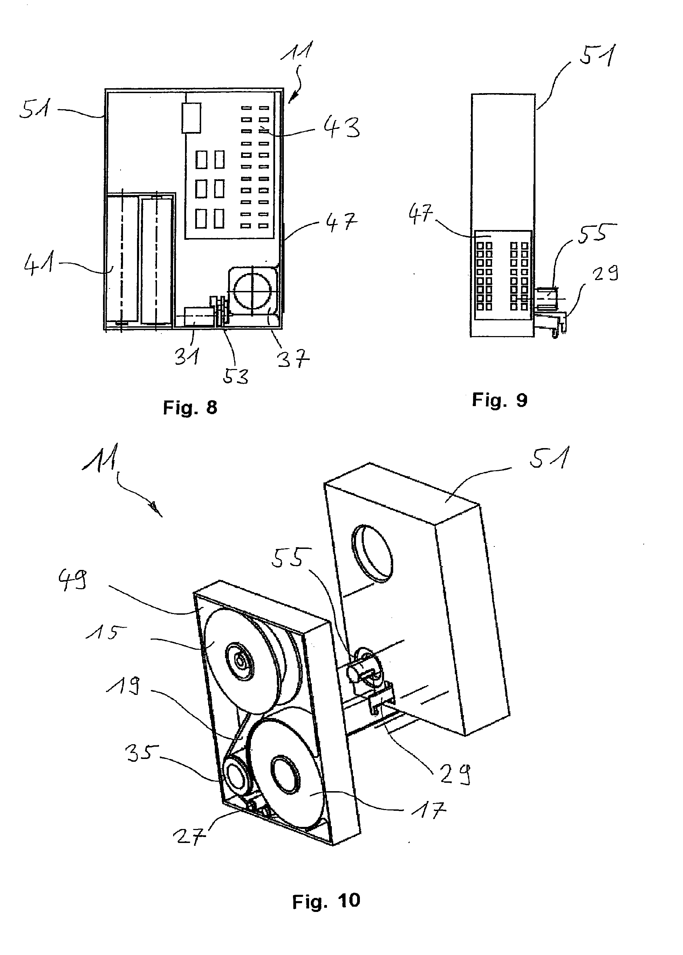

The pistons 29 are pivotably fastened to the second casing part 51 are therefore remain with same when the first casing part 49 is replaced. Figure 8 shows the second casing part in which the positioning motor 31, the step motor 37, the pistons 29n, the batteries 41 and the control circuitry 43 are accommodated. The positioning motor 31 is coupled to the pistons 29 via a gear 53. The gear 53 ensures that at any time only one piston engages with the transfer strip 19. Figure 9 shows the electrical contacts mentioned above and the drive shaft 55 of the step motor 37, which engages with the toothed gear 35 when the first and second casing parts 49, 51 are connected with one another.

In Figure 10, the first casing part 49, which may be regarded a replacement cartridge, and the second casing part 51, which may be regarded a drive cartridge, are shown separated. The first casing part 49 is readily replaced by a new one, awhile the second casing part with its drive units can be used many times.

In an embodiment, the casing 13 is dimensioned so as to fit in the cartridge holder of an ink-jet printer. The electrical contacts 47 are in this case positioned on the casing in a manner that control and printing commends, respectively, may be received from the ink-jet printer. Glass crystals 21 are applicable at substantially any position of a sheet of paper 33 through the motions of the device 11 in a first direction in the ink-jet printer and an orthogonal forwarding (second) direction of the sheet of paper 33. Employing special software, the device can be controlled by the ink-jet printer in a manner that various two-dimensional patterns can be generated with the glass crystals 21 on the sheet of paper 33. This includes ornaments, schematic patterns and characters.

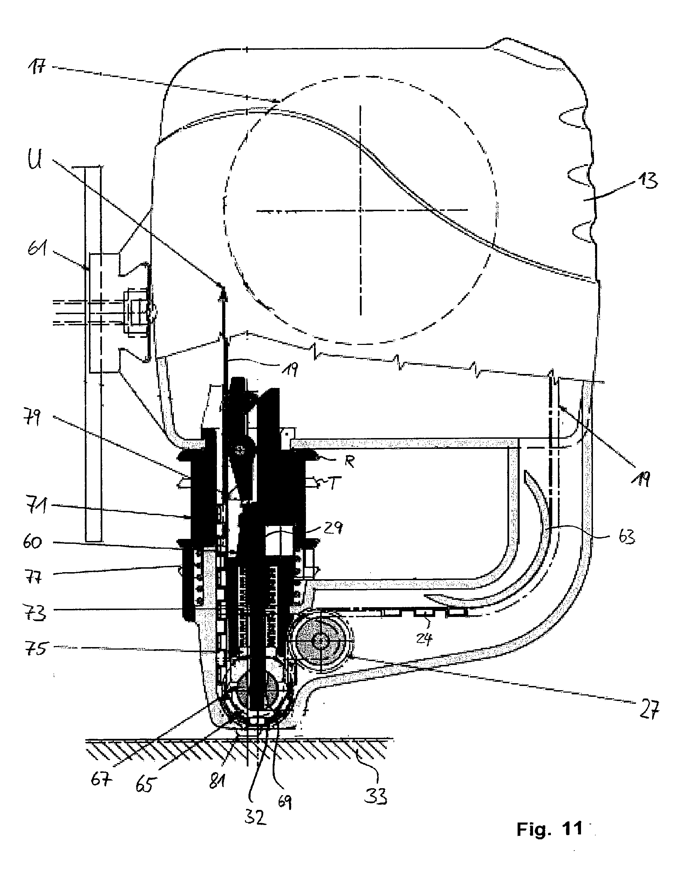

Figure 11 shows another device in which a casing 13 housing an uptake reel 17 (indicated by dashed circle) and a supply reel (not shown for simplicity) in a parallel, non-coplanar arrangement (similar as in Figure 1) is mounted to e.g. a printer by means of an adapter 61 screwed or bolted to the printer. The supply portion of the transfer strip 19 is loosely coiled on the supply reel, led around a guide member 63 and a guide reel 27 to a transfer reel, or pair of transfer reels 65 rotatable about a hub 67. The transfer reel(s) has (have) a generally polygonal shape, in this example hexagonal, the length of one side matching the pitch of the transfer strip, whereby the glass crystals are positioned accurately at the centers of the sides of the polygon in that the spaces between the pouches 24 bend around the corners of the polygon. The hub has a cylindrical or double-frustoconical through hole 69 for guiding a piston 29 there through for application of individual glass crystals. A base 60 comprises the piston 29 integrally formed with, or fixedly secured to a clamp 71 providing a connection for an external actuator (not shown). Actuation will move the clamp 71 and piston 29 from a first, retracted position R to a second, protruding position T in which the piston extends through the hub opening 69 and acts on the glass crystal (not shown) underneath. When moving downward, the base 60 also acts, by means of a coil spring 73, on an interceptor member 75 blocking rotation of the transfer reel(s) 65. After completion of the transfer of the respective glass crystal, the base 60 is retracted, in some embodiments aided by the action of a further coil spring 77. Retraction of the base 60, and interceptor member 75, again allows rotation of the transfer reel(s) 65, so that the constant pull of spring-biased uptake reel 17 acting on the uptake portion of the transfers trip 19 (arrow U) will forward the transfer strip 19. The retraction motion at the same time, by means of an intermitting gear 79, causes the forwarding motion of the transfer strip to be blocked after the transfer strip has moved by one pitch. The device is then ready for the next actuation of the piston, with the next glass crystal in the array or row positioned underneath same.

In some environments, it may be desirable to always keep the applicator device 11 away from the surface of the substrate 33. For this purpose, there may be one or more spacer tabs 81 positioned adjacent the opening 32 through which the glass crystals are protruded.

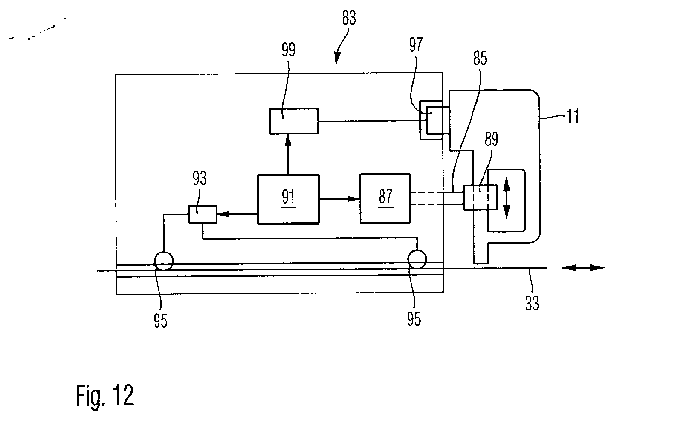

Figure 12 schematically shows the apparatus 11 fixedly attached (e.g. bolted or screwed) to a cartridge holder 97 of a printer 83. The printer 83 moves a sheet 33 of paper or other flat material in the left/right direction (horizontal double arrow), e.g. by means of rollers 95 driven by a paper feed drive 93 in turn controlled by a printer control 91. The printer 83 further comprises an actuator 87, also controlled by the printer control 91, for moving a holder 89 by means of e.g. a lever 85. The holder 89 is adapted to be engaged with the clamp 71 of Figure 11. The actuator moves the holder 89, and therefore the clamp 71, in the up/down direction (vertical double arrow). The printer control 91 further controls a cartridge actuator 99 to move the cartridge holder 97 in a direction perpendicular to the plane of the drawing. In this manner, it is possible to quickly move the sheet 33 of paper and the apparatus 11 with respect to one another so that the desired location is reached, and a glass crystal can be transferred to the sheet of paper by a downward motion of the lever 85 for adhering a glass crystal in the desired position.

The above described embodiments are merely exemplary and do not limit the present invention. The person skilled in the art will realize that various modifications are possible without leaving the scope of the invention as defined in the appended claims.

The present application also discloses the following items:
1. A cartridge for accommodating a transfer strip carrying an array of decorative bodies each having at least one flat surface, the cartridge comprising:
   an uptake reel carrying a first portion of the transfer strip without decorative bodies;
   a supply reel carrying a second portion of the transfer strip with the array of decorative bodies;
   and at least one guide reel for guiding the transfer strip from the supply reel to the uptake reel along a strip pathway, wherein the guide reel is positioned between the uptake reel and the supply reel along the strip pathway, wherein the uptake reel and the supply reel are parallel and non-coplanar.
2. A transfer strip including an array of decorative bodies each having an outer face, the transfer strip comprising a receiving layer having an array of pouches, each pouch surrounding at least one of the arrayed decorative bodies, wherein the receiving layer has holes sized and positioned to allow each one of the decorative bodies to pass through one of the holes when transferred from the respective pouch onto a substrate, wherein the decorative bodies have an adhesive applied on at least one of their faces oriented essentially parallel to the plane of the strip, and wherein the transfer strip has a plurality of through-recesses formed in a longitudinal side rim.
3. A transfer strip including an array of decorative bodies each having an outer face, the transfer strip comprising: a tacky layer adhering to each of the arrayed decorative bodies on sides of the decorative rigid bodies opposite to their outer faces, the array extending in a longitudinal direction of the strip; and a stabilizing layer affixed to the tacky layer, and having an array of pouches, each pouch surrounding at least one of the decorative bodies, wherein the stabilizing layer has holes sized and positioned so that each of the decorative bodies is registered with one of the holes, wherein the decorative bodies have a pressure sensitive adhesive applied on their outer faces, and wherein the transfer strip has a plurality of through-recesses formed in a longitudinal side rim.
4. The cartridge of item 1, accommodating the transfer strip of one of items 2 and 3.
5. A device for transferring decorative bodies onto a substrate from a transfer strip carrying an array of such decorative bodies each having a flat surface, the device comprising:
   an uptake reel carrying a first portion of the transfer strip without decorative bodies;
   a supply reel carrying a second portion of the transfer strip with the array of decorative bodies;
   at least one guide reel for guiding the transfer strip from the supply reel to the uptake reel along a strip pathway, wherein the guide reel is positioned between the uptake reel and the supply reel along the strip pathway; and
   a casing accommodating the uptake, supply and guide reels,
   wherein the casing further accommodates a piston arranged for exerting a force on each one of the decorative bodies individually so as to protrude at least the flat surface of the respective decorative body from the cartridge.
6. The device of item 5, wherein the transfer strip is the one of item 2 or 3, or the casing includes the cartridge of item 1 or 4.
7. The device of item 5 or 6, further comprising an actuator for moving the piston.
8. The device of one of items 5 to 7, further comprising a tractor mechanism for moving forward the transfer strip by a predefined distance after an individual decorative body has been released from the transfer strip.
9. The device of item 8, wherein the tractor mechanism comprises a biasing spring adapted to exert a pulling force on the transfer strip; and a lever arranged to alternately block the motion of the transfer strip and the motion of the piston.
10. A system comprising the transfer strip of one of items 2 to 3, the device according to one of items 4 to 9, and a displacement apparatus such as a printer, e.g. an ink-jet printer, adapted to move a plane substrate such as a sheet of paper in a first direction and to move the cartridge in a second direction parallel to the plane of the substrate and non-parallel, in particular orthogonal to the first direction, the system holding the cartridge such that the direction of protrusion is non-parallel to the plane of the substrate, whereby the protruded decorative bodies come into contact with selectable positions on the substrate.
11. An apparatus for transferring decorative rigid bodies each having at least one flat side from a transfer strip carrying the decorative rigid bodies onto a substrate, the apparatus comprising:
   a first reel for carrying the transfer strip with the decorative rigid bodies;
   a second reel for receiving the transfer strip after the decorative rigid bodies have been transferred to the substrate;
   and a piston, located at a position between the first reel and the second reel as measured along the transfer strip, and adapted for individually bringing the decorative rigid bodies into contact with the substrate.
12. An apparatus for mounting body-like elements onto a face of a substrate, the apparatus comprising:
   - a first and a second reel, and
   - a transfer strip supporting a plurality of the elements, and which is windable from the first onto the second reel,
      wherein the first and the second reel and the transfer strip carrying the elements are accommodated in a casing, and wherein a plunger is arranged in the casing between the first and the second reel, which plunger has access to the face of the transfer strip opposite the elements for transferring one element from the transfer strip to the face of the substrate, respectively.
13. The apparatus of item 12, wherein the elements are decorative rigid bodies.
14. The apparatus of item 12 or 13, wherein the plunger comprises a piston spaced apart from the transfer strip and reciprocatingly movable in a direction substantially orthogonal to the transfer strip.
15. The apparatus of item 14, wherein the plunger comprises an actuator such as a electric motor.
16. The apparatus of item 14 or 15, wherein the end of the plunger facing the transfer strip is rounded.
17. The apparatus of one of items 11 to 16, wherein the transfer strip is driven by an actuator, such as a step motor.
18. The apparatus of one of items 11 to 17, wherein the transfer strip has a plurality of through-recesses arranged in succession along its entire length, in particular formed in one of its side rims, the through-recesses adapted to engage with a toothed gear driven by a step motor.
19. The apparatus of one of items 11 to 18, wherein the first and/or the second reel are biased so that the transfer strip is tightened between the first and second reel.
20. The apparatus of one of items 11 to 19, wherein the casing consists of a first casing part and a second casing part, wherein the first and second reel and the transfer strip carrying the elements or rigid bodies are accommodated in the first casing part, and the driving units and the plunger are accommodated in the second casing part.
21. The apparatus of one of items 15 to 20, wherein the driving units are supplied with electric energy by a power source such as a battery accommodated in the casing.
22. The apparatus of one of items 11 to 21, wherein the elements or rigid bodies are supported on the transfer strip by an adhesive.
23. The apparatus of one of items 11 to 22, wherein the elements or rigid bodies have an adhesive, in particular a pressure sensitive adhesive, on their faces facing away from the transfer strip.
24. The apparatus of one of items 15 to 23, comprising a plurality of electrical contacts formed on the surface of the casing, which contacts provide an electrical connection to electronic drive circuitry accommodated in the casing for controlling the driving units.
25. The apparatus of one of items 11 to 24, wherein the casing is adapted to be mounted in a printer cartridge support of an ink-jet printer in a manner such that is movable in a first direction parallel to the surface of the substrate.
26. The apparatus of one of items 11 to 25, wherein the elements or rigid bodies are glass crystals.
27. A method of fixing decorative rigid bodies onto a surface of a flat substrate, the method comprising:
   - moving the substrate in a first direction into a desired first position;
   - moving a cartridge accommodating a transfer strip supporting the decorative rigid bodies in a second direction into a desired second position, wherein the first and second directions are parallel to the surface of the substrate and are mutually non-parallel;
   - moving a plunger in a third direction substantially perpendicular to the surface of the substrate, thereby exerting a protruding force onto a selected one of the decorative rigid bodies until it comes into contact with the surface of the substrate and adheres thereto, and retracting the plunger.
28. The method of item 27, further comprising repeating the steps for another first and second position.

### List of reference numerals:

- 11: device for transferring elements onto a substrate
- 13: casing
- 15: first (supply) reel
- 17: second (uptake) reel
- 19: transfer strip
- 21: glass crystal (or element)
- 23: adhesive tape
- 24: pouches in transfer strip
- 25: transfer adhesive
- 27: guide reel
- 29: plunger or piston
- 31: positioning motor
- 32: opening
- 33: sheet of paper, article
- 35: toothed gear
- 37: step motor
- 39: toothed belt
- 41: battery
- 43: control circuitry
- 45: printed circuit board
- 47: electrical contacts (terminals)
- 49: first (replacement) casing part
- 51: second (permanent) casing part
- 52: through-recesses, through holes
- 53: gear
- 55: drive shaft
- 60: base
- 61: adapter
- 63: guide member
- 65: transfer reel(s)
- 67: transfer hub
- 69: through hole
- 71: clamp
- 73: coil spring (interceptor)
- 75: interceptor member
- 77: coil spring (retraction)
- 79: intermitting gear
- 81: spacer tab(s)
- 83: printer
- 85: lever
- 87: lever actuator
- 89: holder
- 91: printer control
- 93: feed control
- 95: rollers
- 97: cartridge holder
- 99: cartridge actuator

## Claims

1. A carrier tape with a plurality of arrayed pouches accommodating decorative rigid bodies therein, wherein a succession of through-recesses is formed in one of its side rims, further comprising an adhesive tape to which the decorative rigid bodies are adhered.

2. The carrier tape of claim 1, wherein the pouches are dimensioned so that when the carrier tape is wound to a coil, decorative rigid elements accommodated in overlaying pouches are spaced apart from one another.

3. The carrier tape of claim 2, wherein the pouches have a depth larger than the height of the decorative rigid bodies.

4. The carrier tape of one of claims 1 to 3, wherein the decorative rigid bodies each carry a pressure sensitive adhesive on their sides facing away from the adhesive tape.

5. The carrier tape of one of claims 1 to 4, wherein the decorative rigid bodies are glass crystals.

6. The carrier tape of claim 5, wherein the glass crystals have a base diameter of 1.5 to 3 mm and/or a height of 0.5 to 2 mm.

7. The carrier tape of one of claims 1 to 6, wherein the through recesses are through holes.

8. Use of the carrier tape of one of the preceding claims for applying the decorative rigid bodies accommodated therein individually to a substrate, comprising arranging the carrier tape such that one of the decorative rigid bodies is positioned below an actuator; moving the actuator towards the one of the decorative rigid bodies so as to press same onto the substrate; releasing the one decorative rigid body from the adhesive tape; and retracting the actuator, leaving the one of the decorative rigid bodies behind applied onto the substrate.

9. The use of claim 8, wherein the arranging comprises moving the carrier tape in a first direction into a first position and moving the substrate in a second direction different from the first direction, into a second position.

10. The use of claim 9, wherein the first direction and the second direction are mutually perpendicular.

11. The use of claims 9 or 10, wherein the actuator is moved in a third direction different from the first and second directions.

12. The use of claim 11, wherein the third direction is perpendicular to a plane parallel to both the first and the second direction.

13. The use of one of claims 8 to 12, wherein the substrate is a sheet of paper.

14. The use of one of claims 8 to 13, comprising repeating the steps for another first and second position.

15. The use of claim 14, wherein the decorative rigid bodies are arranged as an ornament, schematic pattern, character, or number.
